# EUROPÄISCHE PATENTSCHRIFT

(11) **EP 0 824 954 B1**
(45) Veröffentlichungstag und Bekanntmachung des Hinweises auf die Patenterteilung: **23.10.2002**
(21) Anmeldenummer: 97114471.2
(22) Anmeldetag: 21.08.1997
(51) Int. Cl.: B01D 53/78, B01D 53/14, B01D 53/56, B01D 53/58, B01D 53/68

(54) **Verfahren zur gemeinsamen Reinigung der bei der Herstellung von Mineraldüngemitteln entstehenden Abgase mittels einer Waschlösung**
Process for joint-purification of waste gases obtained in the production of mineral fertilizers by means of a scrubbing solution
Procédé pour purifier conjointement, par contact avec une solution absorbante, des gaz résiduels provenant de la production d'engrais mineraux

(30) Priorität: 23.08.1996 DE 19634177
(43) Veröffentlichungstag der Anmeldung: 25.02.1998
(73) Patentinhaber: BASF AKTIENGESELLSCHAFT, 67056 Ludwigshafen (DE)
(72) Erfinder: Grimmer, Karl, 67105 Schifferstadt (DE); Purucker, Bernhard, Dr., 67069 Ludwigshafen (DE); Dittmar, Heinrich, Dr., 67063 Ludwigshafen (DE); Rauls, Matthias, Dr., 67117 Limburgerhof (DE); Meckl, Stefan, Dr., 67157 Wachenheim (DE)
(74) Vertreter: Isenbruck, Günter, Dr.

(56) Entgegenhaltungen:
- EP-A- 0 351 613
- EP-A- 0 562 328
- WO-A-93/07087
- DE-A- 2 713 544
- US-A- 3 514 376
- US-A- 3 880 620
- US-A- 3 890 228

## Beschreibung

Die Erfindung betrifft ein Verfahren zur gemeinsamen Reinigung der bei der Herstellung von Mineraldüngemitteln entstehenden Abgase enthaltend Stickoxide, Ammoniak, Wasserdampf, Fluorwasserstoff, Siliciumfluorid und Feststoffstäube, insbesondere Alkali- und Erdalkalinitrate, -sulfate, -phosphate, -fluoride und Mischsalze, mittels einer Waschlösung in einer Waschkolonne, bei der Prozeßwässer aus der Düngemittelproduktion mindestens einen Teil der Waschlösung bilden, wobei der Waschlösung ein Additiv zugesetzt wird. Als Prozeßwässer werden üblicherweise wäßrige Lösungen bezeichnet, die beim Herstellungsverfahren der Mineraldünger entstehen, sowie solche, die beim Spülen von Apparateteilen anfallen, wie auch Waschlösungen, die aus Abgaswäschen anderer Apparate stammen. Diese Abwässer können verdünnt sein, um bestimmte Konzentrationen an Chemikalien nicht zu überschreiten.

Verfahren zur Herstellung von Mineraldüngemitteln wie Nitrophosphat- oder Nitrophosphat-Kalium-Dünger (NP- oder NPK-Dünger) weisen im allgemeinen folgende sequentielle Verfahrensschritte auf:
- Aufschluß: die Auflösung der festen Rohstoffe (Rohphosphat, Diammoniumphosphat, Monoammoniumphosphat, u.a.) in Mineralsäuren und Ausschleusung unlöslicher Bestandteile
- Umwandlung: gezielte Kristallisation von Calciumnitrat
- Neutralisation: Neutralisation der sauren Lösung mit NH₃
- Eindampfung: Konzentrierung der Lösung, auch als Maische bezeichnet, durch Wasserabdampfung
- Kalimischung: Zudosierung von Kali- und anderen Salzen zur Formeleinstellung
- Granulation und Trocknung: Formgebung der Maische in Granulat und Restwasserentfernung mittels Brenngasen/Heißluft.

Bei Durchführung dieser Verfahrensschritte treten Abgase und Dämpfe in unterschiedlichen Mengen und mit unterschiedlichen Gehalten an Stickoxiden (NOₓ), Ammoniak (NH₃), Wasserdampf, Fluorwasserstoff (HF), Siliciumfluorid (SiF₄) und Feststoffstäuben (Alkali- und Erdalkalinitrate, -sulfate, -phosphate, -fluoride und Mischsalze) in Abhängigkeit von den eingesetzten Rohstoffen und der Endformel des zu erzeugenden mineralischen Düngemittels auf.

Entsprechend den bestehenden gesetzlichen Vorschriften müssen die Abgase und die Dämpfe vor Abgabe an die Umwelt behandelt werden, um die enthaltenen Inhaltsstoffe zu reduzieren. Hierfür sind bereits eine Reihe von Verfahren bekannt geworden. So beschreibt die EP-B 0 440 932 ein Verfahren zur Wäsche von Abgasen der Düngemittelproduktion, die Ammoniak und Staub enthalten. Die Waschlösung ist eine 50%ige, mit Salpetersäure angesäuerte Ammoniumnitratlösung. Es wird eine Formel (Ungleichung) zur Berechnung des pH-Wertes beansprucht, die gewährleistet, daß keine Ammoniumnitrataerosole entstehen. Der pH-Wert hat Einfluß ausschließlich auf die Aerosolbildung. Er hat keine Auswirkung auf die Waschwirkung bezüglich Staub.

Die EP-A 0 562 328 beschreibt die gemeinsame Aufarbeitung der gesammelten Abgase und Dämpfe aus Neutralisation, Eindampfung, Kalimischung, Granulation und Trocknung in nur einer Apparatur mit trennwirksamen Einbauten, die eine thermodynamische Stufe realisiert hat. Die Abgase werden gereinigt, und gleichzeitig wird durch den Wärmegehalt der Abgase soviel Wasser verdampft, daß eine Feststoffkonzentration (gelöste und ungelöste Bestandteile) bis zu 60 Gew.-% in der Waschlösung erreicht werden kann. Die Prozeßwässer zur Ergänzung der Waschlösung entstammen dem Düngemittelherstellungsprozeß, und die konzentrierte Suspension wird in ihn zurückgeführt. Sie enthält Additive (z.B. Salpetersäure und/oder Ammoniak), Phosphationen und die aus dem Prozeß stammenden und aus den Abgasen abgeschiedenen Stoffe. Die gleichzeitige Behandlung von gesammelten Abgasen in einer Waschapparatur mit einer realisierten thermodynamischen Stufe führt dazu, daß die in den Abgasen enthaltene Vielzahl von Schadund Feststoffen in der Waschlösung niedergeschlagen werden und dort durch Reaktion miteinander und Fällung/Kristallisation zu unlöslichen Sedimenten und Anbackungen im Flüssigkeitsverteiler der umlaufenden Waschlösung und in den trennwirksamen Einbauten (z.B. Schüttungen, Packungen von Füllkörpern) führen. Das hat erheblich verkürzte Standzeiten mit häufigen Betriebsstörungen, Abstellungen und Reinigungen zur Folge.

In der BE 865 351 ist daher auch schon vorgesehen worden, Verkrustungen in der Waschlauge von Rauchgaswäschen durch Additive zu vermindern. Als Additive wurden hier vorgesehen Phosphonate, Ester der Polysulfonsäure mit höheren Alkoholen und Polyolen, Acrylpolymere und Polyacrylamide in Konzentrationen von 5 g/m³ bis 50 g/m³, was etwa 5 bis 50 ppm entspricht. Es handelt sich hierbei jedoch um vergleichsweise gering konzentrierte Lösungen. Aus der EP-A 538 026 ist schließlich bekannt, Copolymerisate der Acrylsäure mit Aminoethylenphosphonsäure/-phosphonaten zur Verhinderung von Calciumsulfatablagerungen bei der Hochtemperaturoxidation von in Schwefelsäure gelösten Metallerzen einzusetzen. Es handelt sich hier um extrem saure Lösungen, bei denen die Löslichkeit gegenüber den kritischen Salzen sehr hoch liegt.

Der Erfindung liegt die Aufgabe zugrunde, Ablagerungen bei der Wäsche von Abgasen, wie sie bei der Herstellung von Mineraldüngemitteln entstehen, zu verringern oder ganz zu vermeiden und damit die Verfügbarkeit der Anlagen zu erhöhen.

Diese Aufgabe wird erfindungsgemäß dadurch gelöst, daß als Additiv Polymerisate der Acrylsäure und/oder der Methacrylsäure zugesetzt werden. Gemäß einer besonders vorteilhaften Ausbildung der Erfindung werden als Additive niedermolekulare Polyacrylsäuren und deren Alkalisalze mit Molekulargewichten zwischen 1.000 bis 20.000 eingesetzt. Vorteilhafterweise werden dabei mit sekundären Alkoholen, insbesondere mit Isopropanol oder Sekundär-Butanol terminierte Polyacrylsäuren eingesetzt. Besonders vorteilhaft sind als Additive mit Isopropanol terminierte niedermolekulare Polyacrylsäure mit einem Molekulargewicht von ca. 2.000 bis 8.000, vorzugsweise ca. 3.000 bis 5.000, und deren Natriumsalze. Sie werden durch radikalische Polymerisation von Acrylsäure und Methacrylaten in sekundären Alkoholen oder in Mischungen mit anderen Lösungsmitteln, bevorzugt Wasser, hergestellt, wobei mindestens 10% des Lösungsmittels aus sekundären Alkoholen besteht. Die Menge der Additive wird dabei so eingestellt, daß sich in der Waschlösung Konzentrationen von 100 ppm bis 1.000 ppm, vorzugsweise 200 ppm bis 400 ppm, bezogen auf die Masse der Waschlösung, befinden. Erfindungsgemäß wirksame Natriumpolymerisate sind beispielsweise als Good Rite K752 der Firma Goodrich (USA), Dispex N40 der Firma Allied Colloids (GB) und Sokalan CP10 der Firma BASF (D) im Handel erhältlich.

Es wurde gefunden, daß die Anwendung des erfindungsgemäßen Additivs zu einer deutlich verzögerten Krustenbildung in Waschsuspensionen bei der Düngemittelabgaswäsche führt. Gegenüber früher ein- bis zweiwöchentlichen Reinigungen der Abgaswaschkolonne werden bei Anwendung des erfindungsgemäßen Verfahrens Standzeiten von mindestens 8 Wochen erreicht.

Weitere Einzelheiten und Vorteile der Erfindung können dem nachstehend beschriebenen Ausführungsbeispiel des erfindungsgemäßen Verfahrens entnommen werden.

### BEISPIEL

In einer Waschkolonne, wie sie in der EP-A 0 562 328 dargestellt und beschrieben ist und die mit Füllkörpern ausgestattet ist, wird über eine Leitung Prozeßwasser aus der Düngemittelherstellung zugeführt, mit der Sammelabgase aus der Düngemittelproduktion gereinigt werden. Die Kreislauf-Waschsuspension wies in den Hauptkomponenten folgende Zusammensetzung auf:

| Gelöste Ionen: | |
|---|---|
| Ca(2+) | 0,13 Gew.-% |
| PO₄(3-) | 1,36 Gew.-% |
| SO₄(2-) | 1,80 Gew.-% |
| K(1+) | 0,66 Gew.-% |
| Mg(2+) | 0,01 Gew.-% |
| NH₄(1+) | 6,97 Gew.-% |
| NO₃(1-) | 21,88 Gew.-% |

| sonstige Daten: | |
|---|---|
| pH-Wert | 3,6 |
| Temperatur | 58 - 60 °C |
| gesamt Feststoffe (gelöst und ungelöst) | 38,3% |

Um die Wirkungsweise des erfindungsgemäß eingesetzten Additivs zu untersuchen, wurde die Suspension bei 60 °C in einem Rührbehälter temperiert und gerührt. Es wurden gleichzeitig eine 5,4%ige Ammoniumsulfatlösung und eine 11%ige Calciumnitratlösung zudosiert, um die weitere Zunahme von kristallbildenden Ionen zu simulieren. Dies entspricht der Konzentrationserhöhung bei der Abgaswäsche durch die ausgewaschenen Stäube. Als Referenz diente ein Versuch ohne Additivzusatz. Die Ergebnisse unter Verwendung des Additivs SOKALAN® CP 10 sind in der folgenden Tabelle zusammengefaßt:

| | **SOKALAN®-Konzentration [Gew.-ppm]** | **Befund** |
|---|---|---|
| Referenz | kein Additiv | spontaner Ausfall von Feststoff; fest haftende Krustenbildung auf allen Oberflächen des Rührgefäßes |
| Versuch 1 | 20 | verzögerte, aber nach wenigen Minuten gleiche Krustenbildung wie beim Referenzversuch |
| Versuch 2 | 100 | verzögerte, aber deutliche Trübung und Feststoffausfall; intensiv angeströmte Oberflächen bleiben jedoch krustenfrei; Krustenbildung in schlecht bespülten Zonen |
| Versuch 3 | 200 | verzögerte, aber deutliche Trübung und Feststoffausfall; Oberflächen bleiben jedoch krustenfrei; Feststoff sedimentiert in schlecht angeströmten Zonen, aber kaum Krustenbildung |
| Versuch 4 | 1.000 | zunächst kein Feststoffausfall beobachtbar; erst nach 12stündigem Rühren sedimentierender Feststoff; keine Krusten an den Oberflächen |

Die Versuche zeigen deutlich den Einfluß des Additivs SOKALAN® CP 10 auf die Krustenbildung. Mit zunehmender Konzentration steigt die Wirksamkeit. Für die Anwendung im Abgasreinigungsverfahren stellte sich eine Konzentration von 200 ppm bis 400 ppm als hinreichend heraus.

Die allgemein bekannte Empfindlichkeit von Additiven gegenüber hohen Erdalkalikonzentrationen mit Flockung und Ausfällung des Polymers wurde in einem gesonderten Versuch geprüft. Dazu wurde die vorgenannte Waschsuspension mit 1.000 ppm SOKALAN® CP 10 versetzt und bei ca. 60 °C eine Stunde gerührt. Hier, wie auch in den oben tabellierten Fällungsversuchen konnte keine Polymerflockung beobachtet werden.

## Patentansprüche

1. Verfahren zur gemeinsamen Reinigung der bei der Herstellung von Mineraldüngemitteln entstehenden Abgase enthaltend Stickoxide, Ammoniak, Wasserdampf, Fluorwasserstoff, Siliciumfluorid und Feststoffstäube, insbesondere Alkali- und Erdalkalinitrate, -sulfate, -phosphate, -fluoride und Mischsalze, mittels einer Waschlösung in einer Waschkolonne, bei der Prozeßwässer aus der Düngemittelproduktion mindestens einen Teil der Waschlösung bilden, wobei der Waschlösung ein Additiv zugesetzt wird, **dadurch gekennzeichnet, daß** als Additiv Polymerisate der Acrylsäure und/oder der Methacrylsäure zugesetzt werden.

2. Verfahren nach Anspruch 1, **dadurch gekennzeichnet, daß** als Additive niedermolekulare Polyacrylsäuren und deren Alkalisalze mit Molekulargewichten von 1.000 bis 20.000 eingesetzt werden.

3. Verfahren nach Anspruch 2, **dadurch gekennzeichnet, daß** als Additive mit sekundären Alkoholen, insbesondere mit Isopropanol oder SekundärButanol terminierte Polyacrylsäuren eingesetzt werden.

4. Verfahren nach Anspruch 1, **dadurch gekennzeichnet, daß** als Additive mit Isopropanol terminierte niedermolekulare Polyacrylsäure mit einem Molekulargewicht von ca. 2.000 bis 8.000, vorzugsweise ca. 3.000 bis 5.000, und deren Natriumsalze eingesetzt werden.

5. Verfahren nach einem der vorhergehenden Ansprüche, **dadurch gekennzeichnet, daß** die Menge des Additivs so eingestellt wird, daß sich in der Waschlösung Konzentrationen von 100 ppm bis 1.000 ppm, vorzugsweise 200 ppm bis 400 ppm, bezogen auf die Masse der Waschlösung, befinden.

## Claims

1. A process for the combined purification of the waste gases, formed in the preparation of mineral fertilizers and comprising oxides of nitrogen, ammonia, water vapor, hydrogen fluoride, silicon fluoride and solid dusts, in particular alkali metal and alkaline earth metal nitrates, sulfates, phosphates and fluorides and mixed salts, by means of a wash solution in a scrubbing column in which process waters from fertilizer production form at least part of the wash solution, an additive being added to the wash solution, wherein the additive introduced is a polymer of acrylic acid or of methacrylic acid.

2. A process as claimed in claim 1, wherein the additives used are low molecular weight polyacrylic acids and alkali metal salts thereof having molecular weights of from 1,000 to 20,000.

3. A process as claimed in claim 2, wherein the additives used are polyacrylic acids terminated with secondary alcohols, in particular with isopropanol or secondary butanol.

4. A process as claimed in claim 1, wherein the additives used are low molecular weight polyacrylic acid terminated with isopropanol and having a molecular weight of from about 2,000 to 8,000, preferably from about 3,000 to 5,000, and the sodium salts thereof.

5. A process as claimed in any of the preceding claims, wherein the amount of the additive is set such that concentrations of from 100 to 1,000 ppm, preferably from 200 to 400 ppm, based on the mass of the wash solution, are present in the wash solution.

## Revendications

1. Procédé pour la purification commune des effluents gazeux formés lors de la production d'engrais minéraux contenant des oxydes d'azote, de l'ammoniac, de la vapeur d'eau, du fluorure d'hydrogène, du fluorure de silicium et des poussières solides, en particulier des nitrates, des sulfates, des phosphates et des fluorures alcalins et alcalino-terreux et des sels mixtes, au moyen d'une solution de lavage dans une colonne de lavage dans laquelle les eaux de processus de la production de l'engrais forment au moins une partie de la solution de lavage, la solution de lavage étant additionnée d'un additif, **caractérisé en ce qu'**on utilise comme additif des polymères de l'acide acrylique et/ou de l'acide méthacrylique.

2. Procédé selon la revendication 1, **caractérisé en ce qu'**on utilise comme additifs des acides polyacryliques de bas poids moléculaire et leurs sels alcalins, présentant des poids moléculaires de 1000 à 20000.

3. Procédé selon la revendication 2, **caractérisé en ce qu'**on utilise comme additifs des acides polyacryliques terminés par des alcools secondaires, en particulier par de l'isopropanol ou du butanol secondaire.

4. Procédé selon la revendication 1, **caractérisé en ce qu'**on utilise comme additifs des acides polyacryliques de bas poids moléculaire, terminés par de l'isopropanol présentant un poids moléculaire d'environ 2000 à 8000, de préférence d'environ 3000 à 5000 et leurs sels sodiques.

5. Procédé selon l'une quelconque des revendications précédentes, **caractérisé en ce que** la quantité de l'additif est réglée de telle manière qu'on trouve dans la solution de lavage des concentrations de 100 ppm à 1000 ppm, de préférence de 200 ppm à 400 ppm par rapport à la masse de solution de lavage.
